# EUROPÄISCHE PATENTANMELDUNG

(11) **EP 0 570 690 A2**
(43) Veröffentlichungstag der Anmeldung: **24.11.1993**
(21) Anmeldenummer: 93105543.8
(22) Anmeldetag: 03.04.1993
(51) Int. Cl.: G06F 3/033

(54) **Steuervorrichtung für Cockpits von Flugzeugen**

(30) Priorität: 16.05.1992 DE 4216281
(71) Anmelder: Daimler-Benz Aerospace Airbus Gesellschaft mit beschränkter Haftung, D-21129 Hamburg (DE)
(72) Erfinder: Kricke, Dieter, W-2080 Pinneberg (DE); Liebig, Thilo, W-2153 Neu Wulmstorf (DE)
(74) Vertreter: Hansmann, Dierk, Dipl.-Ing.

(57) **Zusammenfassung**

Die Steuervorrichtung für Cockpits von Flugzeugen wird durch Eingabeelemente und Ausgabeelemente im Bereich einer flächigen Bedieneinheit gebildet. Die Bedieneinheit weist mindestens in einem Bereich ihrer Oberfläche eine berührungssensitive Beschichtung auf, die mit einer Auswertungseinheit verbunden ist und die jeweiligen Berührungskoordinaten ermittelt sowie zu einer Ablaufeinheit überträgt. Die Ablaufeinheit registriert einen Berührungsbeginn als eine Vorauswahl und löst in Abhängigkeit von einer Berührungspositionierung unmittelbar vor einer Beendigung des Berührungskontaktes eine Steuerfunktion aus.

## Beschreibung

Die Erfindung betrifft eine Steuervorrichtung für Cockpits von Flugzeugen, bestehend aus Eingabeelement und Ausgabeelement.

Derartige Vorrichtungen werden verwendet, um eine Bedienung der Vielzahl von Einrichtungen zu ermöglichen, die an Bord eines Flugzeuges vorhanden sind. Gemäß dem derzeit üblichen Stand der Technik werden die Eingabeelemente und die Ausgabeelemente räumlich voneinander getrennt. Eine Vielzahl von Eingabeelementen sind als elektromechanische Schalter ausgebildet, die in einem Bedienpult oberhalb des Kopfbereiches des Piloten angeordnet sind. Als Ausgabeelemente werden beispielsweise Terminals im Bereich eines Hauptpultes oder Anzeigeelemente oberhalb des Kopfbereiches des Piloten verwendet.

Durch diese räumliche Trennung wird die gleichzeitige Bedienung und Kontrolle von Funktionen erschwert. Insbesondere in kritischen Situationen, in denen eine Vielzahl von Bedienfunktionen durchgeführt werden müssen und eine Vielzahl von Anzeigen wahrgenommen werden muß, resultiert aus dieser räumlichen Trennung eine Unübersichtlichkeit. Eine grundsätzlich mögliche Zusammenfassung führt jedoch zu schwer zu überblickenden Strukturen und bei einer engen räumlichen Anordnung von Bedien- und Anzeigeelementen ist nur schwierig eine optische Überwachung möglich.

Aufgabe der vorliegenden Erfindung ist es daher, eine Vorrichtung der einleitend genannten Art derart zu verbessern, daß eine Zusammenfassung von Eingabe- und Ausgabeelementen bei gleichzeitiger Gewährleistung einer ausreichenden Übersichtlichkeit ermöglicht wird.

Diese Aufgabe wird erfindungsgemäß dadurch gelöst, daß Eingabeelement und Ausgabeelement im Bereich einer flächigen Bedieneinheit zusammengefaßt sind, die mindestens in einem Bereich ihrer Oberfläche eine berührungssensitive Beschichtung mit einer verbundenen Auswertungseinheit aufweist, die jeweilige Berührungskoordinaten ermittelt und zu einer Ablaufeinheit überträgt, die einen Berührungsbeginn als eine Vorauswahl registriert und in Abhängigkeit von einer Berührungspositionierung unmittelbar vor einer Beendigung des Berührungskontaktes eine Steuerfunktion auslöst.

Durch die Verwendung einer flächigen Anzeigeeinrichtung, beispielsweise eines Bildschirmes oder eines Displays, ist es möglich, der Anzeige eine berührungssensitive Beschichtung als Eingabeebene zu überlagern, die zur Erfassung von Berührungspositionen mittels einer Auswertungseinheit geeignet ist. Hierdurch kann im Bereich der Anzeigeeinrichtung eine Auswahl jeweils aktueller Bedienfunktionen dargestellt werden, auf die manuell beispielsweise mit Hilfe eines Fingers gezeigt werden kann. Die Auswertungseinheit ermittelt die jeweilige Berührungsposition und überträgt deren Koordinaten zur Ablaufeinheit, die eine Zuordnung zu der jeweils angezeigten Bedienfunktion herstellt. Es wird jedoch nicht unmittelbar durch den Berührungsvorgang eine Aktivität ausgelöst, sondern die Bedienpositionierung vor einer Beendigung des Berührungskontaktes ausgewertet. Hierdurch ist es möglich, Fehlbedienungen, die beispielsweise aufgrund eines schrägen Blickwinkels oder aufgrund von Fehlpositionierungen des Fingers ausgelöst werden könnten, zu vermeiden. Nach der Aufnahme der Berührung ist es vielmehr möglich, die jeweilige Bedienpositionierung zu verändern und andere Steuerfunktionen voranzuwählen. Es ist ebenfalls möglich, mit dem bedienenden Finger entlang der sensitiven Beschichtung in einen Rücksprungbereich zu ziehen, der dazu dient, eine Auslösung spezifischer Steuerfunktionen nach einer Beendigung des Berührungskontaktes zu verhindern.

Zur Vereinfachung der Bedienstruktur sowie zur Gewährleistung einer großen Bedienübersichtlichkeit wird vorgeschlagen, daß die Bedieneinheit zur selektiven Anzeige von aktuellen Bedienmöglichkeiten ausgebildet ist.

Zur Verringerung der Gefahr einer irrtümlichen Auslösung von Steuerfunktionen wird vorgeschlagen, daß zur Visualisierung der Vorauswahl eine optische Hervorhebung eines jeweils angewählten Bereiches nach einer Aufnahme der Berührung und vor einer Ausführung der jeweiligen Steuerfunktion gebildet ist.

Ein definierter Abbruch einer Bedienoperation ohne Auslösung einer Steuerfunktion wird dadurch ermöglicht, daß im Bereich der Bedieneinheit mindestens ein Feld für einen Abbruch der Bedienoperationen ohne Auslösung einer Steuerfunktion angeordnet ist.

Zur Verdeutlichung der zu einem Bediener zu übertragenden Informationen ist es auch möglich, daß mindestens eine akustische Ausgabeeinheit vorgesehen ist. Damit kann beispielsweise das Treffen einer Vorauswahl und das Auslösen einer Steuerfunktion akustisch angezeigt werden.

Eine flexible Bedienung wird dadurch realisiert, daß zur Ermöglichung einer Unterbrechung des Ablaufes von Steuerfunktionen ein Speicher angeordnet ist, in dem ein jeweiliger Systemzustand abgelegbar und eine Fortsetzung der Abarbeitung der Steuerfunktionen nach einer Unterbrechung durchführbar ist.

Eine sichere Bedienungsmöglichkeit auch bei Steuerfunktionen, die nur vergleichsweise selten angewählt werden, wird dadurch bereitgestellt, daß die Ablaufeinheit mit einem Vorschauelement versehen ist, das einer jeweils vorausgewählten Steuerungsfunktion auszuführende Aktivitäten zuordnet und eine Darstellung im Bereich der Bedieneinheit vorgibt.

Eine Ertastbarkeit einer jeweils ausgeübten manuellen Funktion wird dadurch ermöglicht, daß die sensitive Beschichtung als eine sensitive Folie ausgebildet ist, die für taktile Rückmeldungen mit Druckpunkten versehen ist.

In der Zeichnung sind Ausführungsbeispiele der Erfindung schematisch dargestellt. Es zeigen:
- Fig. 1: ein Blockschaltbild zur Verdeutlichung des Steuerungsprinzips,
- Fig. 2: ein Blockschaltbild zur Darstellung der wesentlichen Funktionselemente,
- Fig. 3: eine perspektivische Darstellung eines mit der Vorrichtung ausgerüsteten Cockpits **und**
- Fig. 4: ein prinzipielles Ablaufdiagramm zur Veranschaulichung der Bedienstruktur.

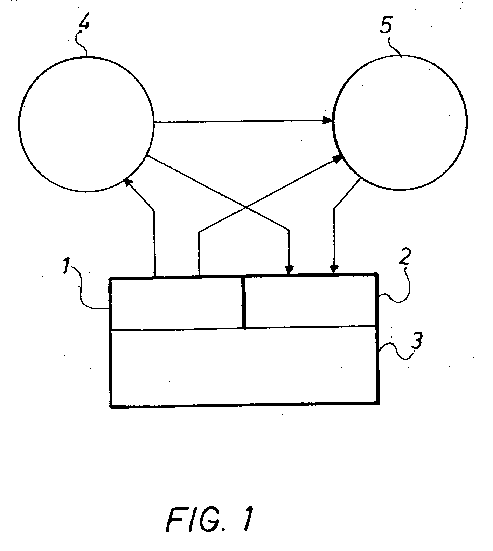

Die dargestellte Steuervorrichtung des Flugzeuges weist ein Eingabeelement (1) sowie ein Ausgabeelement (2) auf. Das Eingabeelement (1) und das Ausgabeelement (2) sind im Bereich einer flächigen Bedieneinheit (3) angeordnet. Aus dem Übersichtsdiagramm in Figur 1 ist ersichtlich, daß über das Eingabelement (1) und das Ausgabeelement (2) sowohl Flugzeug-Basissysteme (4) als auch Überwachungssysteme (5) ansprechbar sind. Zu den Flugzeug-Basissystemen (4) werden Kontrollfunktionen und zu den Überwachungssystemen (5) gleichfalls zugeordnete Kontrollfunktionen (7) übermittelt. Die Flugzeug-Basissysteme (4) sind darüber hinaus mit Systemanzeigen und die Überwachungssysteme (5) mit weiteren Systemanzeigen ausgestattet.

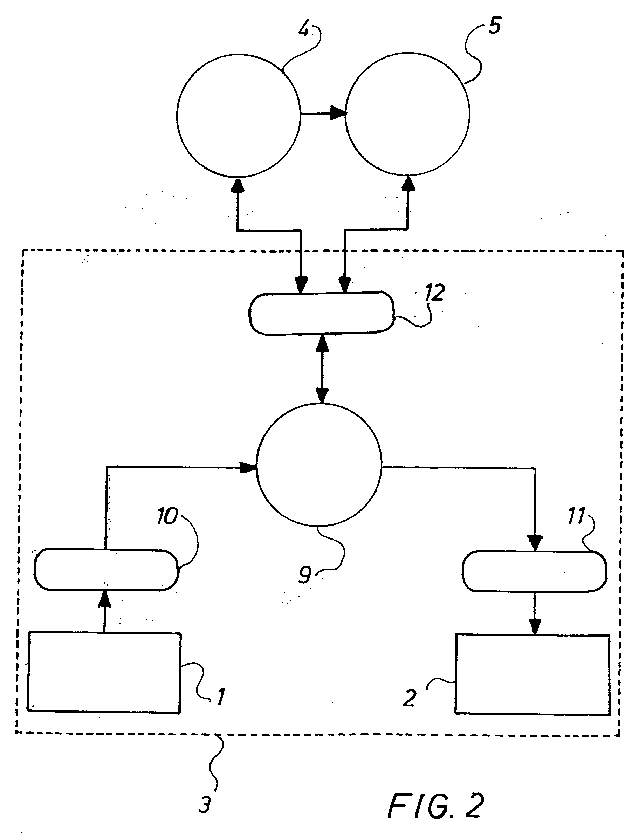

Die flächige Bedieneinheit (3) ist als ein sensitiver Bildschirm ausgebildet, der sowohl eine Anzeige von grafischen und numerischen Informationen zuläßt, als auch eine sensitive Beschichtung aufweist, die eine Erfassung einer jeweiligen Berührungsposition ermöglicht. Zur Umsetzung der jeweiligen Berührungsposition in Koordinateninformationen ist eine Auswertungseinheit vorgesehen, die die jeweils ermittelten Berührungskoordinaten zu einer Ablaufeinheit (9) überträgt. Als Zwischenelement kann entsprechend der Ausführungsform in Figur 2 eine Schnittstelle (10) vorgesehen sein. Zum Anschluß des Ausgabeelementes (2) an die Ablaufeinheit (9) ist gleichfalls eine Schnittstelle (11) vorgesehen. Die Kopplung der Ablaufeinheit (9) mit den Flugzeug-Basissystemen (4) sowie den Überwachungssystemen (5) erfolgt über eine weitere Schnittstelle (12).

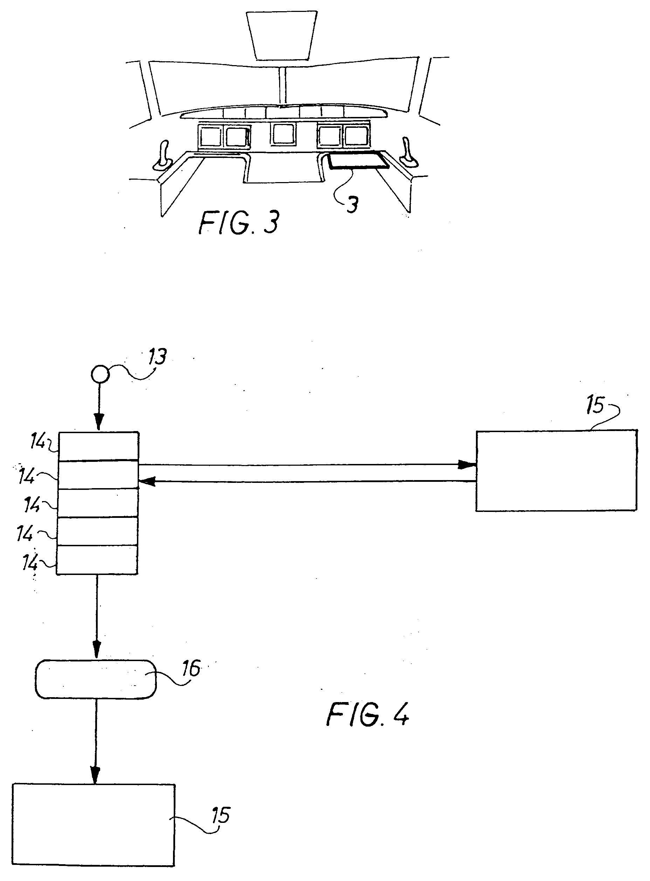

Die Anordnung der Bedieneinheit (3) im Bereich des Cockpits kann entsprechend Figur 3 beispielsweise als Arbeitstisch erfolgen, an den sich der Pilot in einer entspannten Arbeitshaltung setzen kann. Zusätzlich kann er in einfacher Weise weitere Kontroll- und Bedienelemente beobachten, die in einer unmittelbaren Umgebung zur flächigen Bedieneinheit (3) angeordnet sind. Die gesamte Bedienung des Flugzeuges ist somit auf örtlich konzentrierte Bauelemente zusammengefaßt, die Fehlbedienungen sowie ein Übersehen von wichtigen Informationen vermeidet. Wird die Bedieneinheit (3) nicht benötigt, kann sie (ähnlich einer Schublade) weggeklappt oder weggeschoben werden.

Der grundsätzliche Aufbau der Ablaufsteuerung ergibt sich aus Figur 4. Ausgehend von einer Einkopplung (13) werden unterschiedliche Steuerungselemente (14) abgearbeitet. Ausgehend von den Steuerungselementen (14) ist es möglich, Hauptbedienfunktionen (15) zu aktivieren und nach deren Durchführung in den Bereich des verlassenen Steuerelementes (14) zurückzukehren, um dessen Abarbeitung fortzusetzen. Nach einer vollständigen Abarbeitung der Steuerungselemente (14) wird nach dem Passieren einer Auskopplung (16) zu den Hauptbedienfunktionen (15) zurückgekehrt.

Durch die Unterteilung in unterschiedliche Steuerungselemente (14) ist es möglich, im Bereich der Bedieneinheit (3) jeweils nur diejenigen Bedienfunktionen darzustellen, die für einen aktuellen Betriebszustand erforderlich sind. Es resultiert hieraus eine gute Übersichtlichkeit, die dem Piloten die Durchführung der Bedienung erheblich erleichtert. Nach einer Anwahl eines bestimmten Bereiches auf dem Bildschirm kann die derart vorausgewählte Bedienfunktion mit Hilfe der Ablaufeinheit (9) grafisch hervorgehoben werden. Dies kann beispielsweise durch eine Farbhinterlegung, eine Intensitätsveränderung oder ein Blinken realisiert werden. Die tatsächliche Aktivierung erfolgt jedoch erst dann, wenn die Berührung innerhalb des vorausgewählten Bereiches unterbrochen wird. Wird hingegen unter fortlaufender Berührung der angewählte Bereich gewechselt, so wird die Vorauswahl zurückgenommen und eine Vorauswahl des nächsten angewählten Bereiches durchgeführt. Zur Ermöglichung einer Beendigung der Berührung der Bedieneinheit (3) ohne Auslösung einer Funktion ist ein entsprechender passiver Rücksprungbereich vorgesehen.

Alternativ zu einer Beschichtung der Bedieneinheit (3), die lediglich passiv eine Erfassung einer jeweiligen Berührungsposition ermöglicht, ist es auch denkbar, beispielsweise eine sensitive Folie zu verwenden, die mehrlagig aufgebaut ist und über eine Druckpunktgestaltung eine manuelle Rückmeldung über eine jeweils durchgeführte Bedienfunktion ermöglicht.

Mit Hilfe der Ablaufeinheit (9) ist es ebenfalls möglich, parallel zur Vorauswahl Informationen bezüglich der jeweils auslösbaren Aktionen einzublenden. Die Wahrscheinlichkeit von Fehlbedienungen wird hierdurch nochmals reduziert, da dem Benutzer mögliche Konsequenzen seiner Eingabe übersichtlich veranschaulicht werden.

## Patentansprüche

1. Steuervorrichtung für Cockpits von Flugzeugen, bestehend aus Eingabeelement und Ausgabeelement, dadurch gekennzeichnet, daß Eingabeelement (1) und Ausgabeelement (2) im Bereich einer flächigen Bedieneinheit (3) angeordnet sind, die mindestens in einem Bereich ihrer Oberfläche eine berührungssensitive Beschichtung mit einer verbundenen Auswertungseinheit aufweist, die jeweilige Berührungskoordinaten ermittelt und zu einer Ablaufeinheit (9) überträgt, die einen Berührungsbeginn als eine Vorauswahl registriert und in Abhängigkeit von einer Berührungspositionierung unmittelbar vor einer Beendigung des Berührungskontaktes eine Steuerfunktion auslöst.

2. Vorrichtung nach Anspruch 1, dadurch gekennzeichnet, daß die Bedieneinheit (3) zur selektiven Anzeige von aktuellen Bedienmöglichkeiten ausgebildet ist.

3. Vorrichtung nach Anspruch 1 oder 2, dadurch gekennzeichnet, daß zur Visualisierung der Vorauswahl eine optische Hervorhebung eines jeweils angewählten Bereiches nach einer Aufnahme der Berührung und vor einer Ausführung der jeweiligen Steuerfunktion gebildet ist.

4. Vorrichtung nach einem der Ansprüche 1 bis 3, dadurch gekennzeichnet, daß im Bereich der Bedieneinheit (3) mindestens ein Feld für einen Abbruch der Bedienoperationen ohne Auslösung einer Steuerfunktion angeordnet ist.

5. Vorrichtung nach einem der Ansprüche 1 bis 4, dadurch gekennzeichnet, daß mindestens eine akustische Ausgabeeinheit angeordnet ist.

6. Vorrichtung nach einem der Ansprüche 1 bis 5, dadurch gekennzeichnet, daß zur Unterbrechung des Ablaufes von Steuerungselementen (14) ein Speicher angeordnet ist, in dem ein jeweiliger Systemzustand abgelegbar und eine Fortsetzung der Abarbeitung der Steuerungselemente (14) nach einer Unterbrechung durchführbar ist.

7. Vorrichtung nach einem der Ansprüche 1 bis 6, dadurch gekennzeichnet, daß die Ablaufeinheit (9) mit einem Vorschauelement versehen ist, das einer jeweils vorausgewählten Steuerungsfunktion auszuführende Aktivitäten zuordnet und eine Darstellung im Bereich der Bedieneinheit (3) vorgibt.

8. Vorrichtung nach einem der Ansprüche 1 bis 7, dadurch gekennzeichnet, daß die sensitive Beschichtung als eine sensitive Folie ausgebildet ist, die für taktile Rückmeldungen mit Druckpunkten versehen ist.
